# EUROPEAN PATENT APPLICATION

(11) **EP 1 898 646 A2**
(43) Date of publication of application: **12.03.2008**
(21) Application number: 07016916.4
(22) Date of filing: 29.08.2007
(51) Int. Cl.: H04N 7/173

(54) **Electronic comic book delivering server, apparatus for creating translated electronic comic book and method of creating translated electronic comic book**

(30) Priority: 01.09.2006 JP 2006237265; 22.12.2006 JP 2006346668
(71) Applicant: Kabushiki Kaisha Toshiba, Minato-ku, Tokyo 105-8001 (JP)
(72) Inventor: Kunimatsu, Atsushi c/o Intellectual Property Division, Tokyo 105-8001 (JP); Miura, Akira c/o Intellectual Property Division, Tokyo 105-8001 (JP)
(74) Representative: HOFFMANN EITLE

(57) **Abstract**

An electric comic book delivering server delivers translated electric comic book by transmitting original electric comic book data, mask data and translation data to a client terminal via a communication network. The mask data is used to mask a display portion of first language. The translation data is used to superimpose a display portion of second language on the masked display portion of first language. When the electric comic book delivering server obtains mask data and translation data from another client terminal in which the mask data and the translation data have been created, the electric comic book delivering server registers the mask data and the translation data into a database thereof.

## Description

### CROSS-REFERENCE TO RELATED APPLICATIONS

This application is based upon and claims the benefit of priority from the prior Japanese Patent Application No. 2006-237265, filed on September 1, 2006, and No. 2006-346668, filed on December 22, 2006, the entire contents of which are expressly incorporated herein by reference in their entirety.

### BACKGROUND OF THE INVENTION

### 1. Field of the Invention

The present invention relates to: an electric comic book delivering server for delivering an electric comic book to a client terminal via a communication network, the client terminal being connected to the communication network; an apparatus for creating data to be utilized to deliver a translated electric comic book and transmitting the created data to the electric comic book delivering server; and a method of creating the translated electric comic book.

### 2. Description of the Prior Art

Recently, there is provided an electric comic book that is delivered to a user via a communication network such as the Internet so that a user is allowed to enjoy the electric comic book displayed on a screen as well as a real comic book.

Heretofore, in such an electric comic book, there is provided a technique to change a display order or a representation method of display contents of speech balloons in each of which a speech is displayed (JP-A 2002-259111 (KOKAI) : patent document 1).

The patent document 1 described above disclose that contents of the speech balloons are merely changed without consideration to protection of originality for the electric comic book.

A large amount of comic books or comic magazines are issued every day. In the case where translated comic books are created for such a large amount of comic books or comic magazines are translated, a processing load for translation of the comic books or comic magazines to create the translated comic books or translated comic magazines would increase. Thus, there has been a problem that the translated comic books or comic magazines cannot be created speedily.

### SUMMARY OF THE INVENTION

One aspect of the present invention is directed to an electric comic book delivering server for delivering an electric comic book to a client terminal via a communication network. Each of the server and the client terminal is connected to the communication network. The electric comic book delivering server of the present invention includes: an original electric comic-book database for storing original electric comic book data indicating an original electric comic book obtained by computerizing an original comic book, the original electric comic book being constituted from at least one cartoon sheet. The server also includes a mask data database for storing mask data indicating a mask sheet on which a mask color is drawn for masking character information of each cartoon sheet of the original electric comic book, the mask sheet being to be displayed in a mask layer above an original electric comic book layer for displaying each cartoon sheet of the original electric comic book. The server also includes a translation data database for storing translation data indicating a translation character description sheet in which at least one translation character is described, the at least one translation character being used in place of at least one original character indicated by character information of each cartoon sheet of the original electric comic book, the at least one original character being masked by the mask color drawn on the mask sheet, the translation character description sheet being to be displayed in a translation character layer above the mask layer. The server also includes a translated electric comic-book transmitter for transmitting, in response to a request to deliver a translated electric comic book from the client terminal, the original electric comic book data, the mask data indicating the mask sheet to be displayed in the mask layer above the original electric comic book layer for displaying each cartoon sheet of the original electric comic book indicated by the original electric comic book data, and the translation data indicating the translation character description sheet to be displayed in the translation character layer above the mask layer for displaying the mask sheet indicated by the mask data, to the client terminal via the communication network. According to the server of the invention, it is possible to create a translated comic book in which originality of an original electric comic book is secured. In addition, it is also possible to reduce a processing load to create a translated electric comic book, and this makes it possible to deliver the translated electric comic book promptly.

Another aspect of the present invention is directed to an apparatus for creating translated electric comic book. The apparatus of the present invention includes an original electric comic-book receiver for receiving original electric comic book data indicating an original electric comic book from an electric comic book delivering server via a communication network, the original electric comic book being obtained by computerizing an original comic book, the apparatus and the server being connected to the communication network, the original electric comic book being constituted from at least one cartoon sheet. The apparatus also includes a mask data acceptor for accepting mask data indicating a mask sheet, on which a mask color is drawn, the mask data being obtained by: displaying the original electric comic book indicated by the original electric comic book data, received from the server by the original electric comic-book receiver, in an original electric comic book layer for displaying each cartoon sheet of the original electric comic book; displaying amask sheet in amask layer above the original electric comic book layer for displaying each cartoon sheet of the original electric comic book; and accepting a drawing operation by a user to draw the mask color at a predetermined position on the mask sheet so as to mask character information of the original electric comic book displayed through the mask sheet. The apparatus also includes a translation data acceptor for accepting translation data indicating a translation character description sheet, on which at least one translation character is described, obtained by: displaying a translation character description sheet in a translation character layer above the mask layer; and accepting the at least one translation character described at a predetermined position on the translation character description sheet by the user, the at least one translation character being used in place of at least one original character indicated by the character information, the character information being masked by the mask color drawn on the mask sheet. The apparatus also includes a register request unit for transmitting the mask data accepted by the mask data acceptor and the translation data accepted by the translation data acceptor to the server via the communication network to request the server to register the mask data and the translation data into a database so that the mask data and the translation data are associated with the original electric comic book data received by the original electric comic-book receiver in order for the server to deliver a translated electric comic book. According to the method of the invention, it is possible to create mask data and translation data for creating a translated comic book in which originality of an original electric comic book is secured to transmit the translated the mask data and the translation data to an electric comic book delivering server. This makes it possible to reduce processing load of the server to create a translated electric comic book . Thus, the server is allowed to deliver the translated electric comic book promptly.

Still another aspect of the present invention is directed to a method of creating an electric comic book by utilizing a client terminal. The method of the present invention includes receiving original electric comic book data indicating an original electric comic book from an electric comic book delivering server via a communication network, the original electric comic book being obtained by computerizing an original comic book, the server being connected to the communication network, the electric comic book being constituted from at least one cartoon sheet. The method also includes accepting mask data indicating a mask sheet, on which a mask color is drawn, the mask data being obtained by: displaying the original electric comic book indicated by the original electric comic book data, obtained from the server, in an original electric comic book layer for displaying each of cartoon sheet of the original electric comic book; displaying a mask sheet in a mask layer above the original electric comic book layer for displaying each of cartoon sheet of the original electric comic book; and accepting a drawing operation by a user to draw the mask color at a predetermined position on the mask sheet so as to mask character information of the original electric comic book displayed through the mask sheet. The method also includes accepting translation data indicating a translation character description sheet, on which at least one translation character is described, obtained by: displaying a translation character description sheet in a translation character layer above the mask layer; and accepting the at least one translation character described at a predetermined position on the translation character description sheet by the user, the at least one translation character being used in place of at least one original character indicated by the character information, the character information being masked by the mask color drawn on the mask sheet. The method also includes transmitting the mask data accepted in the accepting the mask data and the translation data accepted in the accepting the translation data to the server via the communication network to request the server to register the mask data and the translation data into a database so that the mask data and the translation data are associated with the original electric comic book data received in the receiving the original electric comic book data in order for the sever to deliver a translated electric comic book.

### BRIEF DESCRIPTION OF THE SEVERAL VIEWS OF THE DRAWINGS

The above and other objects, features and advantages of the present invention will become apparent from the following description of the preferred embodiments with reference to the accompanying drawings, wherein:
FIG. 1 is a block diagram that shows an example of a configuration of an electric comic book delivering system according to an embodiment of the present invention;
FIG. 2 is a flowchart that shows an example of a process for registering mask data and translation data;
FIG. 3 is an explanatory drawing that shows an example of a state of original electric comic book data stored in an original electric comic book database;
FIG. 4 is an explanatory drawing that shows an example of an original comic book indicated by original electric comic book data;
FIG. 5A is an explanatory drawing that shows an example of creating a mask sheet;
FIG. 5B is an explanatory drawing that shows an example of creating a mask sheet;
FIG. 6A is an explanatory drawing that shows an example of a layer structure after creation of the mask sheet;
FIG. 6B is an explanatory drawing that shows an example of a layer structure after creation of the mask sheet;
FIG. 7A is an explanatory drawing that shows an example of creating a translation character description sheet;
FIG. 7B is an explanatory drawing that shows an example of creating a translation character description sheet;
FIG. 8A is an explanatory drawing that shows an example of a layer structure after creation of the translation character description sheet;
FIG. 8B is an explanatory drawing that shows an example of a layer structure after creation of the translation character description sheet;
FIG. 9 is an explanatory drawing that shows an example of a state of the mask data stored in a speech balloon mask data database;
FIG. 10 is an explanatory drawing that shows an example of a state of the translation data stored in a translation data database;
FIG. 11 is a flowchart that shows an example of a process for delivering translated electric comic book data;
FIG. 12 is a flowchart that shows an example of a process for delivering original electric comic book data; and
FIG. 13 is a flowchart that shows an example of a process for registering translation data.

### DETAILED DESCRIPTION OF THE INVENTION

Preferred embodiments of an electric comic book delivering system, an apparatus for creating a translated electric comic book, and a method of creating a translated electric comic book according to the present invention will now be described with reference to the accompanying drawings.

### <First Embodiment>

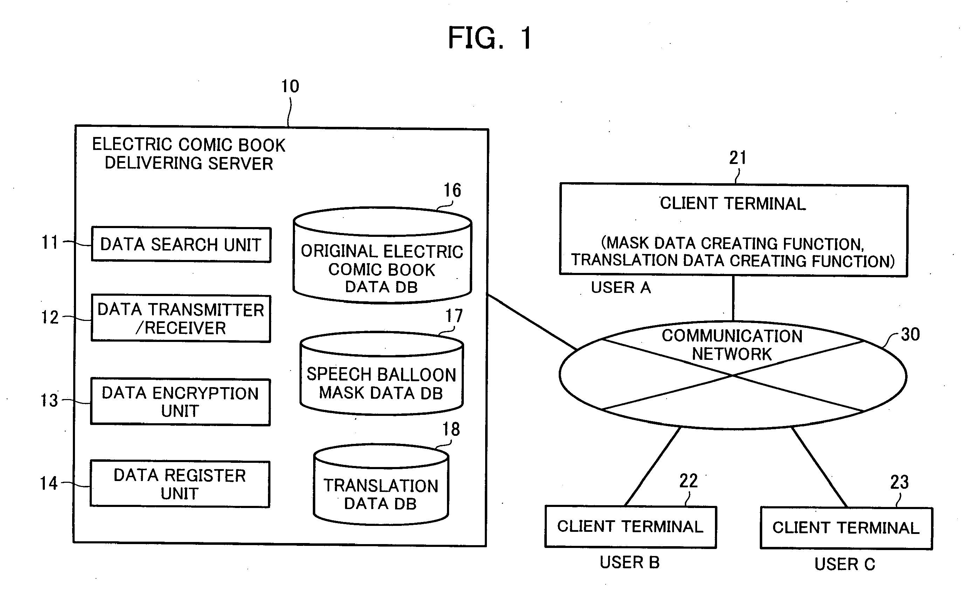

FIG. 1 is ablock diagram that shows an example of an electric comic book delivering system according to a first embodiment of the present invention. As shown in FIG. 1, the electric comic book delivering system includes an electric comic book delivering server 10 and client terminals 21, 22, 23. The electric comic book delivering server 10 and the client terminals 21, 22, 23 are connected to a communication network 30 such as the Internet. Any number of client terminals may be included in the system.

The electric comic book delivering server 10 is constructed from an information processing apparatus such as a WWW server, and managed by a system administrator of the system. In this regard, the electric comic book delivering server 10 may be designed to work in a distributed manner like a peer-to-peer (P2P) server. Alternatively, the electric comic book delivering server 10 may be integrated into any client terminal (for example, the client terminal 21) . The electric comic book delivering server 10 includes: a data search unit 11 for searching for various data; a data transmitter/receiver 12 for transmitting/receiving data; a data encryption unit 13 for encrypting data; a data register unit 14 for registering data into a database; an original electric comic book database 16; a speech balloon mask data database 17 ; and a translation data database 18.

Each of the original electric comic book database 16, the speech balloon mask data database 17 , and the translation data database 18 may be constructed from an information storage such as a database device.

The original electric comic book database 16 includes a storage medium for storing original electric comic book data. The term "original electric comic book data" means data indicating an original electric comic book obtained by computerizing various kinds of original comic books published in independent books and comic magazines. The original electric comic book is constituted from at least one cartoon sheet.

The speech balloon mask data database 17 includes a storage medium for storing speech balloon mask data. The term "speech balloon mask data" means data indicating mask sheets for masking speech balloon portions in each of which a speech or dialogue in a comic book is described. In this regard, the speech balloon mask data is character description portion mask data indicating mask sheets for masking not only the speech balloon portions but also other portions in which characters of the comic book are described (hereinafter, referred to simply as "mask data") .

The translation data database 18 includes a storage medium for storing translation data. The term "translation data" means data indicating translation sheets in which speeches described with original language of the original comic book are translated to another language.

Each of the client terminals 21, 22, 23 is constructed from an information processing apparatus such as a personal computer or a mobile information terminal. In the present embodiment, each of the client terminals 21, 22, 23 has a mask data creating function and a translated data creating function (will be described later) . Further, the client terminal 21 is operated by a user A, the client terminal 22 is operated by a user B, and the client terminal 23 is operated by a user C.

The mask data creating function includes a mask sheet displaying function, a mask sheet creating function (mask drawing function) and a mask data accepting function. The mask sheet displaying function causes a client terminal to display an original comic book in an original electric comic book layer as a lowermost layer. The original comic book is indicated by original electric comic book data received from the electric comic book delivering server 10. The mask sheet displaying function also causes the client terminal to display a mask sheet in a mask layer as an intermediate layer above the original electric comic book layer. The mask sheet creating function causes the client terminal to accept a drawing operation to draw a mask color at a predetermined position on the mask sheet by a user in order to mask character information of the original electric comic book displayed through the mask sheet. The mask data accepting function causes to the client terminal to accept a register request to register the mask data indicating the mask sheet on which the mask color is drawn. In this case, the mask drawing function allows the user to draw the mask color at a desired position with a desired shape/dimension on the mask sheet.

The translation data creating function includes a translation character description sheet displaying function, a translation character description sheet creating function (translation character describing function) and a translation data accepting function. The translation character description sheet displaying function causes a client terminal to display a translation character description sheet in a translation character layer as an uppermost layer above the mask layer. The translation character description sheet creating function causes the client terminal to accept at least one translation character described at a predetermined position on the translation character description sheet. The at least one translation character is used in place of at least one original character indicated by character information of the original electric comic book. The character information is masked by the mask color drawn on the mask sheet that is displayed through the translation character description sheet. The translation data accepting function causes the client terminal to accept a register request to register translation data indicating the translation character description sheet on which the at least one translation character is described. In this case, the translation character description function allows the user to describe the at least one translation character at a desired position with a desired shape/dimension on the translation character description sheet. Further, an image format such as a Joint Photographic Experts Group (JPEG) and a Graphics Interchange Format (GIF), or a property information format for storing a font, a position, a size and character string contents may be applied to a format of the translation character layer.

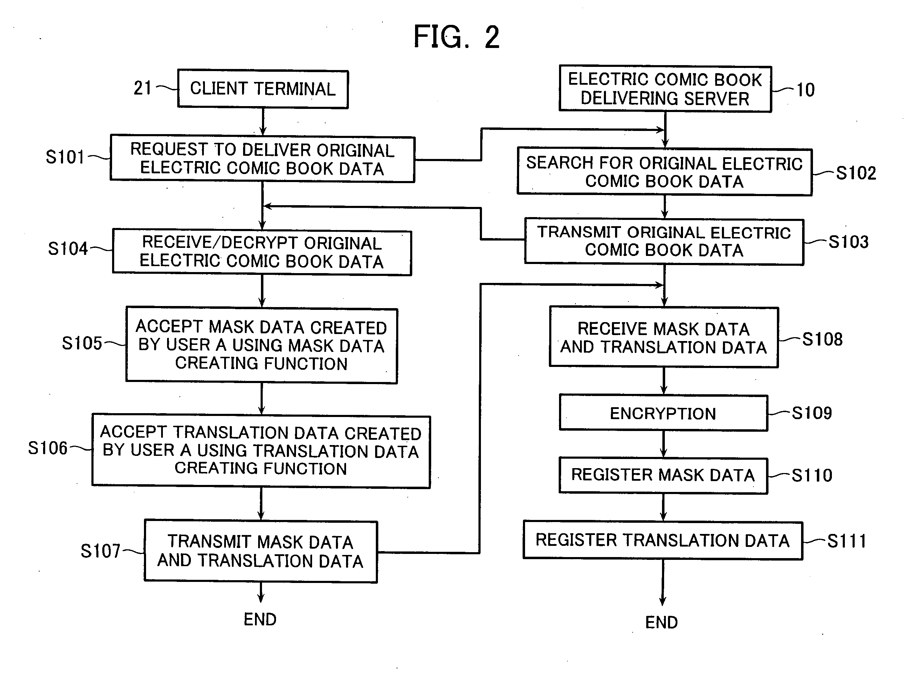

Next, a register process of mask data and translation data in the electric comic book delivering systemwill nowbe described. FIG. 2 is a flowchart that shows an example of the register process of mask data and translation data. Here, an example in which mask data and translation data corresponding to original electric comic book data are created in the client terminal 21, and the mask data and the translation data thus created are registered into the electric comic book delivering server 10 will be explained. In this case, the original electric comic book data indicates an original electric comic book X.

The client terminal 21 first accesses the electric comic book delivering server 10 in accordance with an operation by the user A, and requests to deliver the original electric comic book data indicating the original electric comic book X (Step S101). More specifically, the user A accesses a URL of an electric comic book delivering site set up by the electric comic book delivering server 10, and selects the original electric comic book X on an original electric comic book selection screen for selection of the desired original electric comic book data, whereby the user A requests the electric comic book delivering server 10 to deliver the original electric comic book data indicating the original electric comic book X.

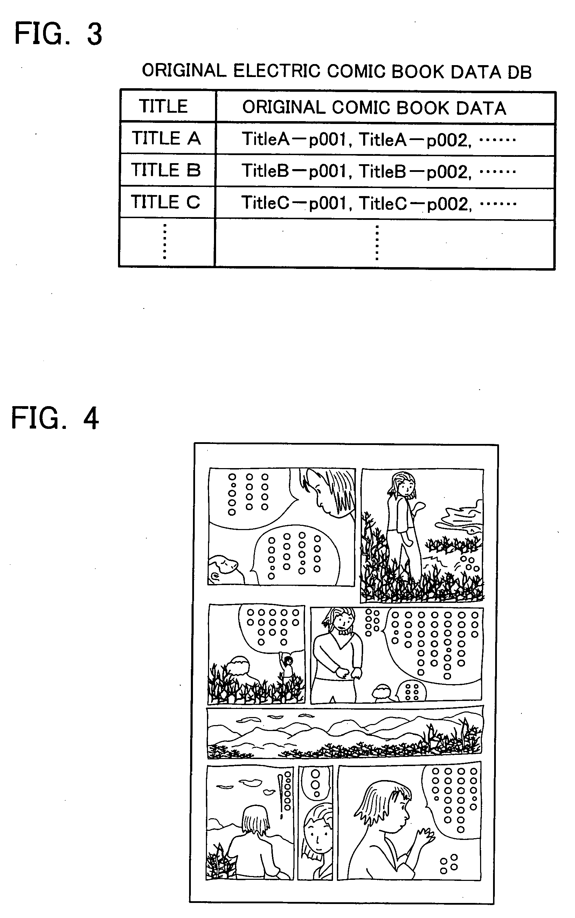

In response to the request to deliver the original electric comic book data, the data search unit 11 searches for the original electric comic book data indicating the requested original electric comic book X from a plurality of original electric comic book data stored in the original electric comic book database 16 (Step S102). Original electric comic book data corresponding to a plurality of titles as shown in FIG. 3 are stored in the original electric comic book database 16. As shown in FIG. 3, the original electric comic book data respectively corresponding to the titles are stored in the original electric comic book database 16 so as to be divided into units of page data each corresponding to a cartoon sheet. The data transmitter/receiver 12 then transmits the searched original electric comic book data to the client terminal 21 via the communication network 30 (Step S103).

The client terminal 21 receives the original electric comic book data and decrypts the original electric comic book data (Step S104). In the present embodiment, the original electric comic book data stored in the original electric comic book database 16 has been encrypted on the basis of an encryption key for the original electric comic book data. Further, an decryption key for decrypting the encrypted original comic book data may be delivered at the same time of or before delivering the original electric comic book data.

Subsequently, the client terminal 21 displays the original electric comic book X (specifically, an operation target page of the original electric comic book X) indicated by the decrypted original electric comic book data on its own display device. Here, as shown in FIG. 4, for example, speeches of speech balloon portions and at least one character of a portion other than the speech balloon portions for indicating a sound effect are described in a first language, such as Japanese, on the original comic book X indicated by the original electric comic book data.

When the original electric comic book X indicated by the original electric comic book data is displayed in the original electric comic book layer as the lowermost layer, the client terminal 21 displays a mask sheet in the mask layer as the intermediate layer above the original electric comic book layer. The client terminal 21 accepts a drawing operation by the user A to draw a mask color (for example, a background color within the speech balloon portions) at a desired position on the mask sheet for masking character information of the original electric comic book displayed through the mask sheet. The client terminal 21 then accepts a request to register mask data indicating the mask sheet on which the mask color is drawn (Step S105). In this case, the mask color for masking the character information of the original electric comic book may be selected by the user A from a palette displayed on the display device, for example.

In the present embodiment, the user A may manipulate an input device such as a keyboard and a mouse with which the client terminal 21 is provided so as to delete the character displayed on the original electric comic book X indicated by the original electric comic book data on the basis of the mask drawing function.

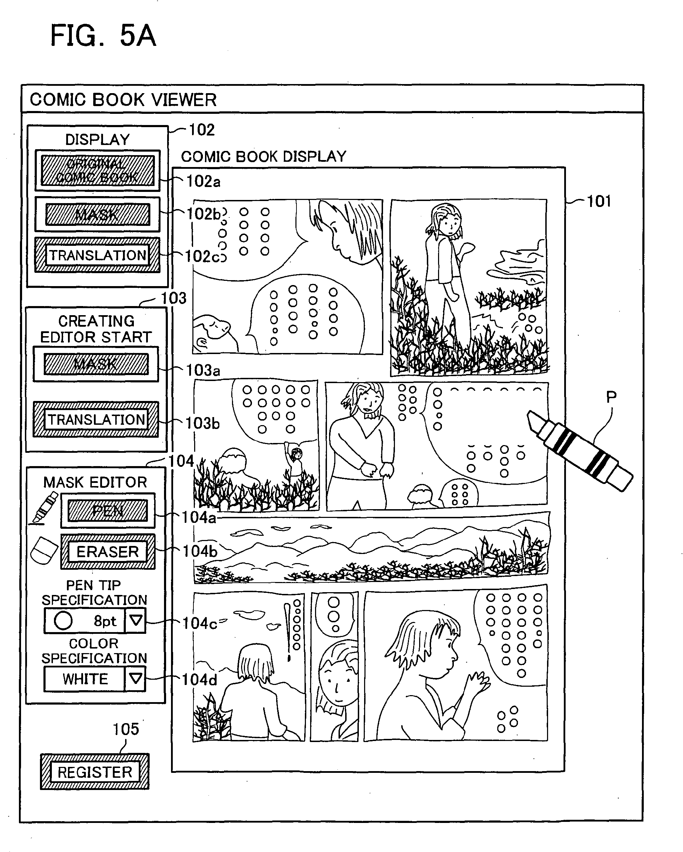

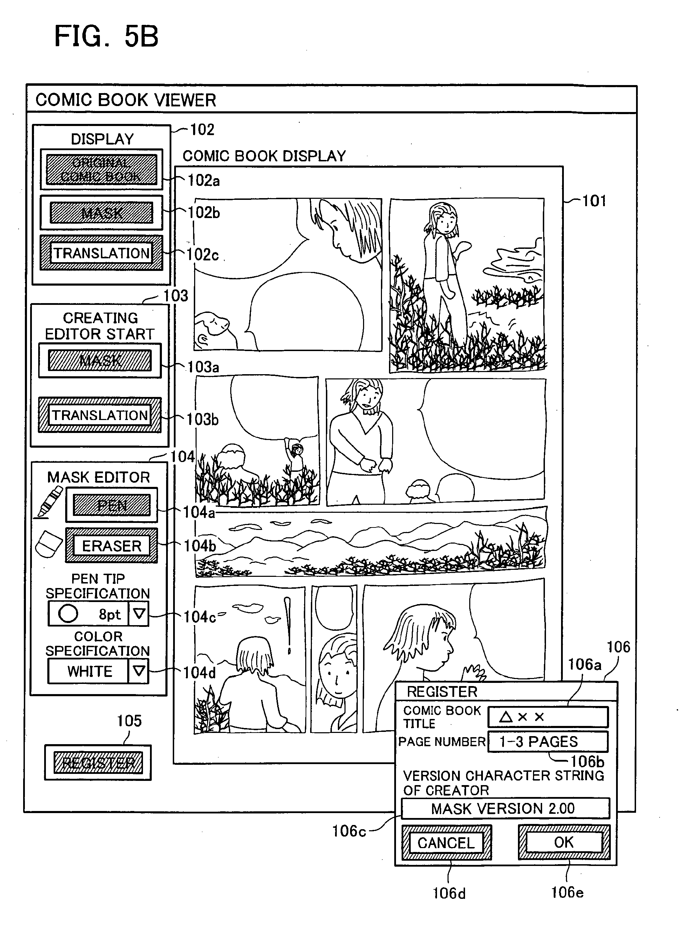

The operation for registering mask data is carried out by utilizing a comic book viewer displayed on the display device of the client terminal 21. In the comic book view, a comic book display area 101, a display switching area 102, a creating editor start area 103, a mask editor area 104 and a register button 105 are provided as shown in FIGS. 5A and 5B.

In the comic book display area 101, at least one of the original electric comic book, the mask sheet and the translation sheet is displayed.

The display switching area 102 is utilized to accept selection of data displayed in the comic book area 101. In the display switching are 102, an original comic book select button 102a for selection of display of the original electric comic book data, a mask select button 102b for selection of display of the mask data, and a translation select button 102c for selection of display of the translation data. In the example shown in FIGS. 5A and 5B, when the user depresses the original comic book select button 102a and the mask select button 102b by means of an operation of the input device such as the mouse, the original electric comic book and the mask sheet are displayed in the comic book display area 101 on the display device.

The creating editor start area 103 is utilized to start an editor for creating mask data or translation data. In the creating editor start area 103, a mask editor start button 103a for starting a mask editor for creating mask data, and a translation editor start button 103b for starting a translation editor for creating translation data are provided. In the example shown in FIGS. 5A and 5B, when the user depresses the mask editor start button 103a by means of an operation of the input device such as the mouse, the mask editor area 104 is displayed.

In the mask editor area 104, a pen specification button 104a, an eraser specification button 104b, a pen tip specification window 104c, a color specification window 104d are provided. The pen specification button 104a is utilized to specify a pen function of drawing (for example, whiting out) character of the original comic book. The eraser specification button 104b is utilized to specify an eraser function of erasing an area drawn by the pen to return the area to an original state. The pen tip specification window 104c is utilized to specify a shape and a size of the pen tip (for example, a circle and 8 pt) . The color specification window 104d is utilized to specify a color of the pen (white and the like). For example, if the speech balloon portion of the comic book is yellow, the user may specify the color of the pen to yellow so as to draw yellow on the characters of the original electric comic book.

The register button 105 is a button for requesting the electric comic book delivering server 10 to register created mask data or translation data to the corresponding databases of the electric comic book delivering server 10. In response to depression of the mask editor start button 103a by the user utilizing the input device such as the mouse, a register window 106 is displayed on the display device as shown in FIG. 5B.

In the register window 106, a comic book title input area 106a, a page number input area 106b, a creator's version character string input area 106c, a cancel button 106d and a decision (OK) button 106e are provided. In response to depression of the OK button 106e, the client terminal 21 transmits information inputted in the areas 106a to 106c, the created mask data as an image to the electric comic book delivering server 10.

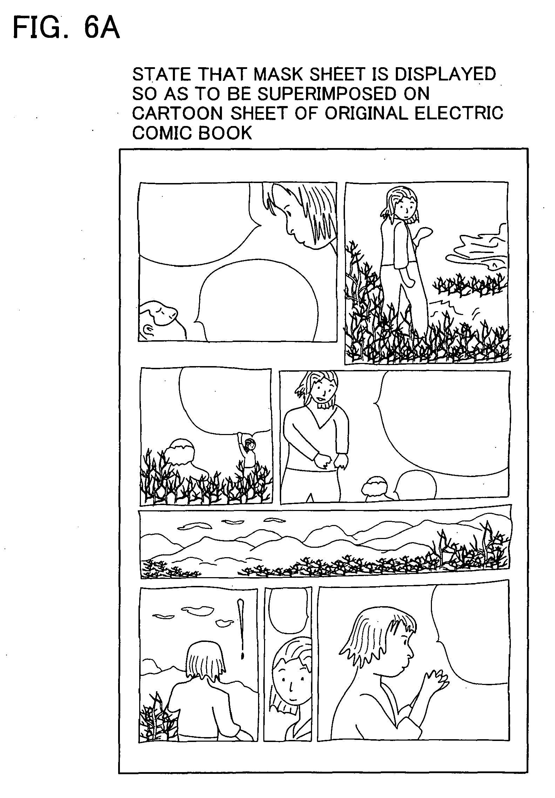

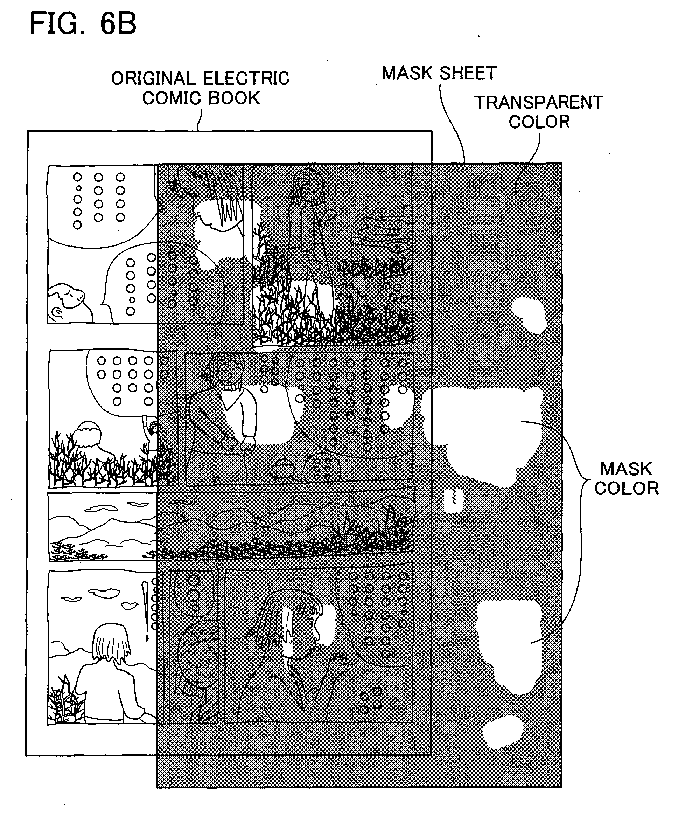

More specifically, in a state where the original electric comic book X is displayed in the original electric comic layer and the mask sheet is displayed in the mask layer, the user A manipulates the pen P displayed on the display device to draw the mask color on the mask sheet so as to delete characters described on the original electric comic book X in a first language (in this example, each of the characters is expressed as a circle) as shown in FIG. 5A. When all of the characters in the first language are masked as shown in FIG. 5B, the operation by the user A is completed. Thus, all of the characters in the first language are removed from the original electric comic book X in physical appearance as shown in FIG. 6A. However, in view of the data, the original electric comic book X displayed in the original electric comic book layer still remain unchanged, and the mask sheet on which the mask color is drawn is just created as shown in FIG. 6B. The mask color is drawn in portions on the mask sheet corresponding to portions in which the characters are described in the first language on the original electric comic book.

In response to acceptance of the mask data, the client terminal 21 displays the translation character description sheet in the translation character layer further above the mask layer for displaying the created mask sheet to accept description by the user A for describing characters in a second language (such as English) at a desired position on the translation character description sheet in place of the characters in the first language masked by the mask color drawn on the mask sheet displayed through the translation character description sheet. The client terminal 21 then accepts a request to register the translation data indicating the translation character description sheet including characters described in the second language (Step S106).

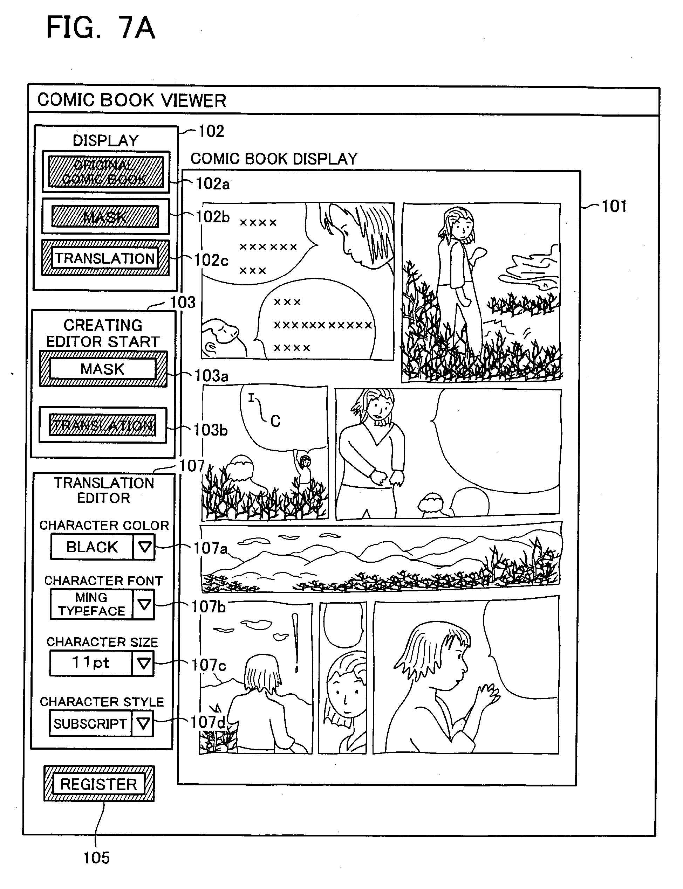

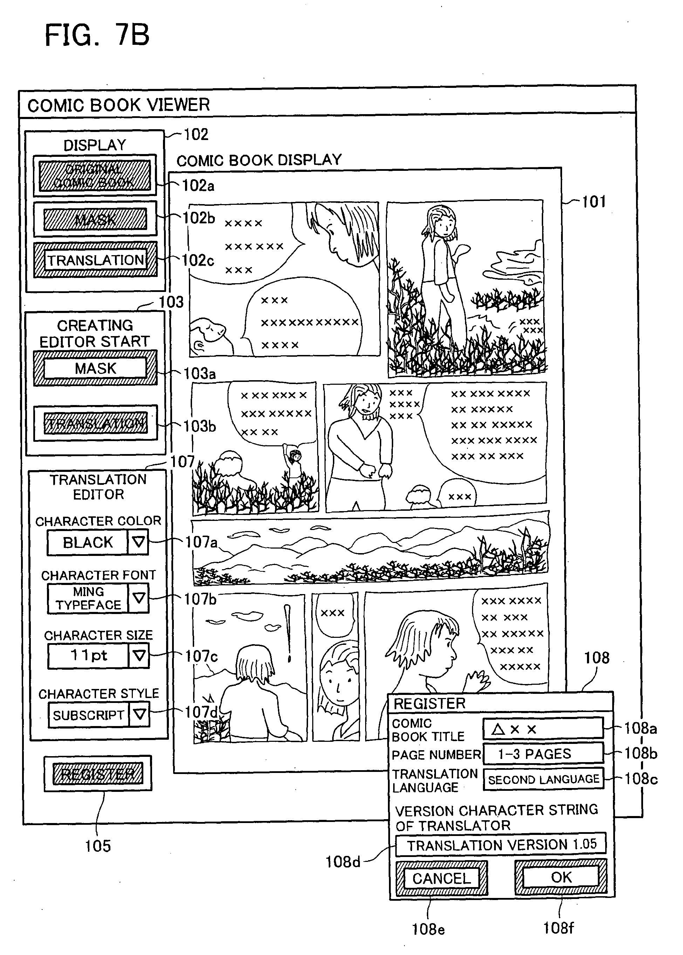

In the present embodiment , the user A manipulates the input device such as the keyboard and the mouse with which the client terminal is provided so as to describe the characters in the second language on the portions masked on the mask sheet that is displayed above the original electric comic book X indicated by the original electric comic book data on the basis of the translation character description function. Register of the translation data is carried out on the comic book viewer in the same manner as that in the register of the mask data. In the comic viewer, as shown in FIGS. 7A and 7B, the comic book display area 101, the display switching area 102, the creating editor start area 103 and the register button 105 are provided in the same manner as shown in FIGS. 5A and 5B. Here, in the case of the comic book viewer shown in FIGS. 7A and 7B, a translation editor area 107 is provided in place of the mask editor area 104 because the translation editor start button 103b is depressed.

In the translation editor area 107, a character color specification window 107a for specifying a character color (for example, black and the like), a character font specification window 107b for specifying a character font (for example, Ming typeface and the like), a character size specification window 107c for specifying a character size (for example, 11 pt and the like), and a character style specification window 107d for specifying a character style (for example, subscript and the like) are provided.

The register button 105 is a button for requesting the electric comic book delivering server 10 to register the created mask data and translation data to the corresponding databases of the electric comic book delivering server 10. When the translation editor start button 103b is depressed in response to an operation of an input device such as the mouse by the user, a register window 108 is displayed on the display device as shown in FIG. 7B.

In the register window 108, a comic book title input area 108a, a page number input area 108b, a translation language input area 108c, a translator's version character string input area 108d, a cancel button 108e and a decision (OK) button 108f are provided. In response to depression of the OK button 108f, the client terminal 21 transmits information inputted in the areas 108a to 108d and the created translation data to the electric comic book delivering server 10. The translation data to be transmitted to the electric comic book delivering server 10 includes, for example, inputted character data (a plural lines, Unicode data, character string including the end "0" data and the like), color data, font data, size data, arrangement data, a pointer to next character data (if no next character is followed, a Null pointer) and the like. In this regard, the translation data may be registered in an uncompleted state. The translation data in the uncompleted state may be modified by an operation of other user.

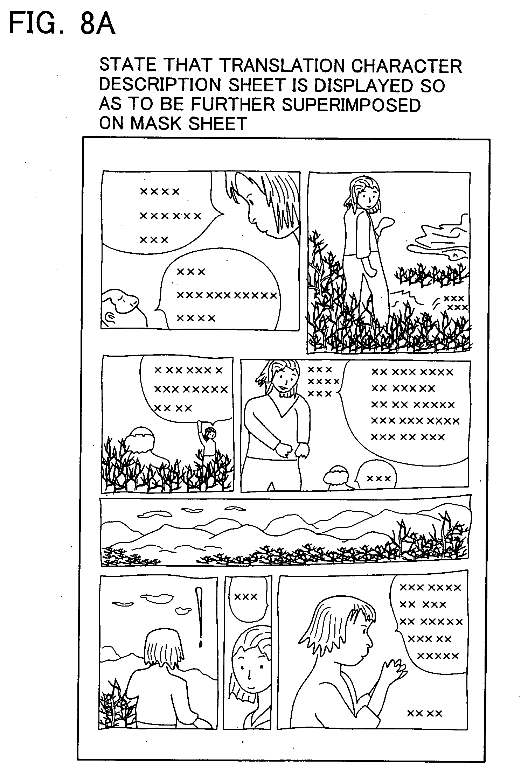

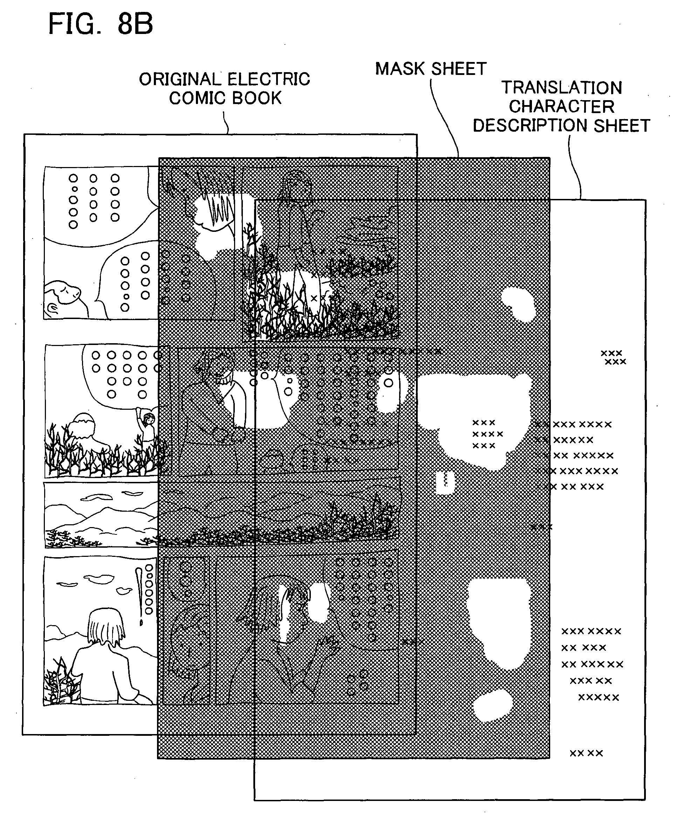

More specifically, in a state where the original electric comic book X, the mask sheet and the translation character description sheet are respectively displayed in the original comic book layer, the mask layer and the translation character layer, the user A moves an input cursor C to a desired position and describes characters in the second language (in this example, each of the characters is expressed as a cross) as shown in FIG. 7A. When all of the characters in the second language are described on the translation character sheet, the operation is completed as shown in FIG. 7B. Thus, all of the characters of the original electric comic book X in the first language are translated into the character in the second language in physical appearance as shown in FIG. 8A. However, in view of the data, the original electric comic book X displayed in the original electric comic book layer still remains unchanged. The mask sheet is displayed above the original electric comic book X and the translation character description sheet is created as shown in FIG. 8B. The mask color is drawn in portions on the mask sheet corresponding to portions in which the characters are described in the first language on the original electric comic book. The characters in the second language are described in portions on the translation character description sheet corresponding to the portions in which the characters are described in the first language on the original electric comic book.

Subsequently, the client terminal 21 associates the accepted mask data and translation data with the corresponding original electric comic book X (such as a code designated to the original electric comic book X) to transmit the accepted mask data and translation data to the electric comic book delivering server 10 (Step S107).

When the electric comic book delivering server 10 receives the mask data and the translation data (Step S108), the data encryption unit 13 in the electric comic book delivering server 10 encrypts the mask data and the translation data thus received (Step S109). The data register unit 14 in the electric comic book delivering server 10 registers the encrypted mask data into the speech balloon mask data database 17 (Step S110) and registers the encrypted translation data into the translation data database 18 (Step S111).

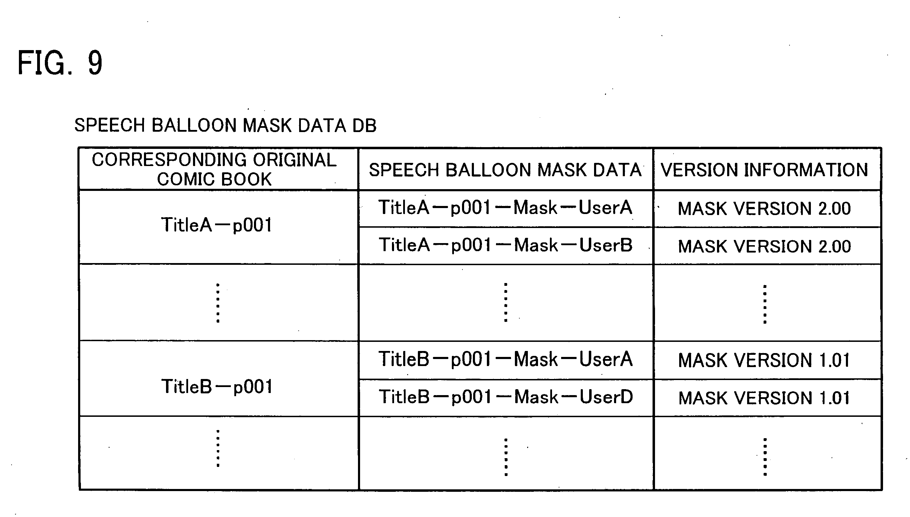

FIG. 9 is an explanatory drawing that shows an example of a state of the mask data stored in the speech balloon mask data database 17. As shown in FIG. 9, the mask data is registered in the speech balloon mask data database 17 in units of pages so that the corresponding original electric comic book data can be identified. The mask data are stored in the mask data database 17 so as to be encrypted by an encryption key for the mask data. Further, a decryption key for decrypting the encrypted mask data is separately delivered at the same time of or prior to the delivering mask data. In the example as shown in FIG. 9, mask data created by the user A and mask data created by the user B are stored in the mask data database 17 so as to correspond to a first page of the original electric comic book data having a title A (such as a title name) . Mask data created by the user A and mask data created by the user D are also stored in the mask data database 17 so as to correspond to a first page of the original electric comic book data having a title B . Moreover, version information is stored in the mask data database 17 so as to correspond to a page number of the original electric comic book data.

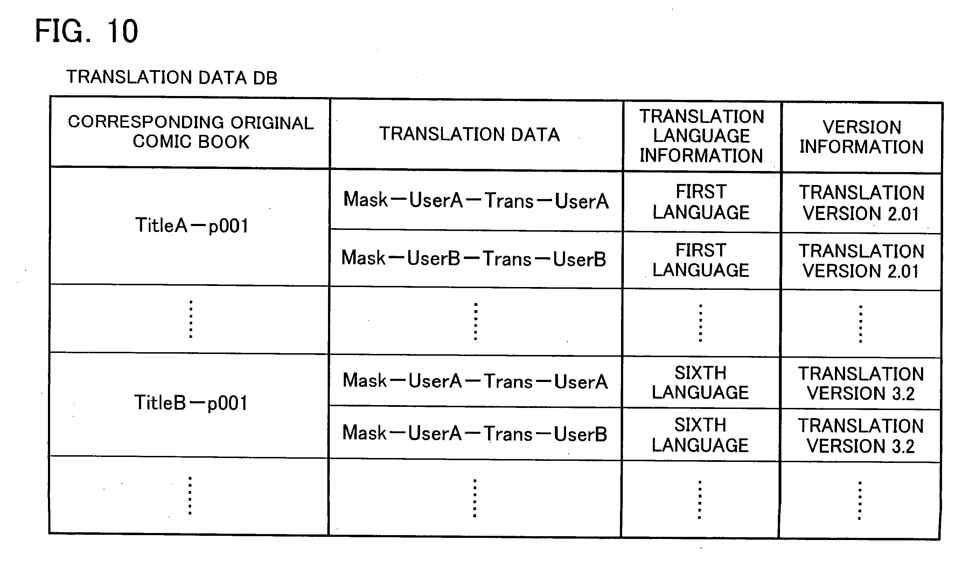

FIG. 10 is an explanatory drawing that shows an example of a state of the translation data stored in the translation data database 18. As shown in FIG. 10, the translation data is registered in the translation data database 18 in units of pages so that the corresponding mask data and the corresponding original electric comic book data can be identified. The translation data are stored in the translation data database 18 so as to be encrypted by an encryption key for the translation data. Further, a decryption key for decrypting the encrypted translation data is separately delivered at the same time of or prior to the delivering the translation data. In the example shown in FIG. 10, translation data created by the user A corresponding to the mask data created by the user A, and translation data created by the user B corresponding to the mask data created by the user B are stored in the translation data database 18 so as to correspond to a first page of the original electric comic book data having a title A. Translation data created by the user A corresponding to the mask data created by the user A and translation data created by the user B corresponding to the mask data created by the user B are also stored in the translation data database 18 so as to correspond to a first page of the original electric comic book data having a title B. Moreover, translation language information and version information are stored in the translation data database 18 so as to correspond to a page number of the original electric comic book data.

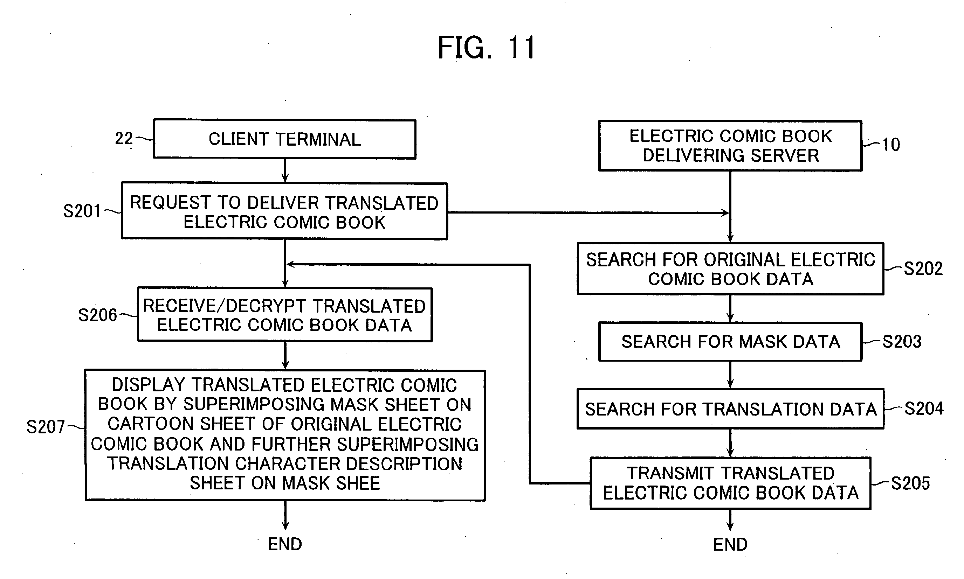

Next, a process for delivering translated electric comic book data in the electric comic book delivering system will be described. FIG. 11 is a flowchart that shows an example of the process for delivering translated electric comic book data. Here, the case where translated electric comic book data indicating translated electric comic book Y translated in the second language from the original electric comic book X are delivered in response to a request from the client terminal 22 will be explained as an example.

The client terminal 22 first accesses the electric comic book delivering server 10 in accordance with an operation by the user B, and requests the electric comic book delivering server 10 to deliver translated electric comic book data indicating a translated electric comic book Y (Step S201). More specifically, the user B accesses a URL of an electric comic book delivering site set up by the electric comic book delivering server 10, and selects the translated electric comic book Y on a translated electric comic book selection screen for selection of the translated electric comic book data to be acquired, whereby the user B requests the electric comic book delivering server 10 to deliver the translated comic book data indicating the translated electric comic book Y.

In response to the request to deliver the translated electric comic book data, the data search unit 11 searches for the original electric comic book data indicating the original electric comic book X to be displayed in the lowermost layer of the requested translated electric comic book Y from original electric comic book data corresponding to a plurality of original electric comic books stored in the original electric comic book database 16 (Step S202). The data search unit 11 also searches for mask data indicating a mask sheet to be displayed in the intermediate layer of the translated electric comic book Y from mask data corresponding to a plurality of original electric comic books stored in the speech balloon mask data database 17 (Step S203). Moreover, the data search unit 11 searches for translation data indicating a translation character description sheet to be displayed in the uppermost layer of the translated electric comic book Y from a plurality of translation data corresponding to a plurality of original electric comic books stored in the translation data database 18 (Step S204). The data transmitter/receiver 12 then transmits the translated electric comic book data constituted from the searched original electric comic book data, the searched mask data and the searched translation data to the client terminal 22 via the communication network 30 (Step 5205) . In this regard, the mask data stored in the speech balloon mask data database 17 and the translation data stored in the translation data database 18 may be registered in the databases 17, 18 by obtaining them from a client terminal, or may be registered in the databases 17, 18by creating them by the system administrator.

In this regard, when the translated electric comic book data are delivered, the electric comic book delivering server 10 may execute a charging operation (such as calculation of charged amount, notification of the charged amount , and automatic settlement) to a user utilizing the client terminal 22 as purchased amount of the translated electric comic book data. In this case, the electric comic book delivering server 10 may calculate, on the basis of the charged amount, a fee for the owner of copyright to the original electric comic book corresponding to the delivered translated electric comic book, and reward for a translator who has created the translation character description sheet indicated by the translation data corresponding to the delivered translated electric comic book. The electric comic book delivering server 10 may then save the calculation result into a database with which the electric comic book delivering server 10 is provided.

The client terminal 22 receives the translated electric comic book and respectively decrypts the original electric comic book data, the mask data and the translation data constituting the translated electric comic book data using separate decryption keys (Step S206).

The client terminal 22 then displays the original electric comic book X indicated by the decrypted original electric comic book data in an original electric comic book layer, displays the mask sheet indicated by the decrypted mask data in a mask layer above the original electric comic book layer, and further displays the translation character description sheet indicated by the decrypted translation data in the translation layer above the mask sheet. Thus, the client terminal 22 displays the translated electric comic book Y on a display device with which the client terminal 22 is provided, as shown in FIG. 8A (Step S207).

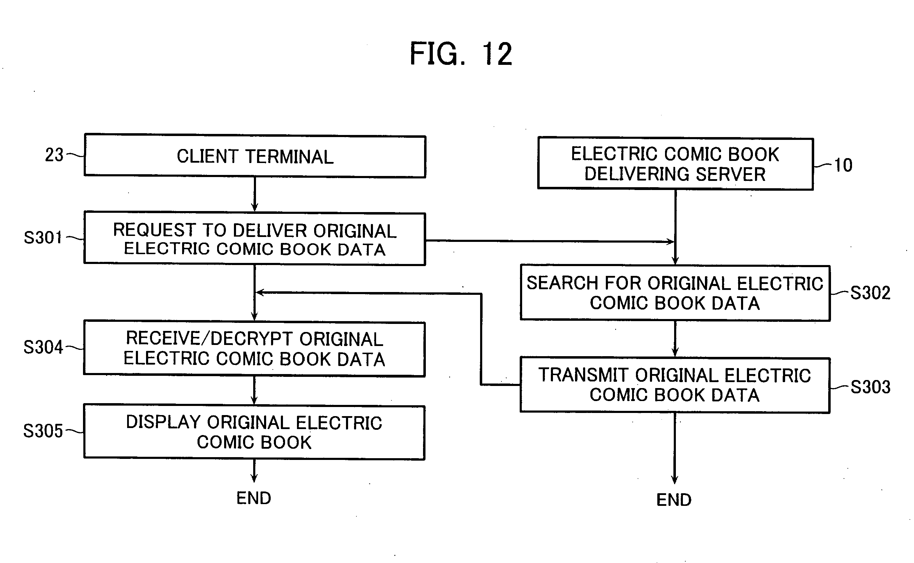

Next, a process for delivering the original electric comic book in the electric comic book delivering system will be described. FIG. 12 is a flowchart that shows an example of the process for delivering the original electric comic book. Here, the case where original electric comic book data indicating the original electric comic book X is delivered in response to a request from the client terminal 23 will be explained as an example.

The client terminal 23 first accesses the electric comic book delivering server 10 in accordance with an operation by the user C, and requests the electric comic book delivering server 10 to deliver an original electric comic book X (Step S301). More specifically, the user C accesses a URL of an electric comic book delivering site set up by the electric comic book delivering server 10, and selects the original electric comic book X on an original electric comic book select screen for selection of the original electric comic book data to be acquired, whereby the user C requests the electric comic book delivering server 10 to deliver the original comic book data indicating the original electric comic book X.

In response to the request to deliver the original electric comic book data, the data search unit 11 searches for the original electric comic book data indicating the requested original electric comic book X from original electric comic book data corresponding to a plurality of original electric comic books stored in the original electric comic book database 16 (Step S302). The data transmitter/receiver 12 then transmits the searched original electric comic book data to the client terminal 23 via the communication network 30 (Step S303).

The client terminal 23 receives the original electric comic book data and decrypts the original electric comic data using a decryption key separately obtained (Step S304). The client terminal 23 may obtain the original electric comic book data and the decryption key separately. The client terminal 23 then displays the original electric comic book X indicated by the decrypted original electric comic book data on a display device with which the client terminal 23 is provided, as shown in FIG. 4 (Step S305).

As described above, according to the first embodiment of the present invention, the mask sheet is displayed in the mask layer above the original electric comic book so as to be superimposed on the original electric comic book. Further, the translation character description sheet is displayed in the translation layer above the mask sheet so as to be superimposed on the mask sheet. The translated electric comic book is thus displayed. Since the mask sheet and the translation character description sheet are newly created, the translated electric comic book can be created without changing the original electric comic book. Therefore, the translated electric comic book can be created while the originality of the original electric comic book is secured. Further, since the mask sheet and the translation character description sheet are created by a user side, a processing load of the server to obtain the translated electric comic book can be reduced. In addition, since the translation data can be obtained from a large number of general users, it can be expected that the mask sheet and the translation sheet are obtained for a short period of time after issuance of each of original electric comic books. Therefore, the translated electric comic book data can be delivered promptly. Moreover, in the case where the reward is paid to the translator whenever delivering the translated electric comic book, it can be expected that the mask sheet and the translation sheet are obtained for a very short period of time, and this makes it pos sible to deliver the translated electric comic book data more promptly.

Further, according to the first embodiment of the present invention, the mask sheet and the translation character description sheet are created at the client terminal 21 and uploaded to the electric comic book delivering server 10. Thus, the mask data and translation data for creating the translated comic book can be created and transmitted to the electric comic book delivering server 10 while the originality of the original electric comic book is secured. Thus, the processing load of the electric comic book delivering server 10 to obtain the translated electric comic book can be reduced. The electric comic book delivering server can deliver the translated electric comic book promptly.

### <Second Embodiment>

In the first embodiment described above, although the mask sheet and the translation character description sheet are created at the client terminal 21 and uploaded to the electric comic book delivering server 10, only the translation character description sheet may be created using already available mask sheet.

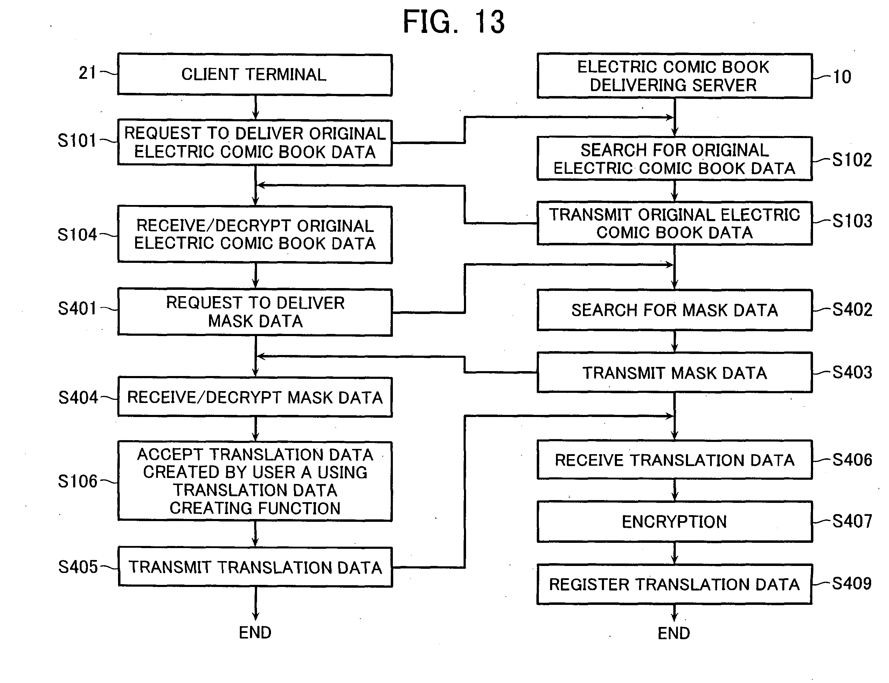

FIG. 13 is a flowchart that shows an example of process for registering translation data. Here, the case where translation data corresponding to original electric comic book data indicating an original electric comic book X are created at the client terminal 21 using existing mask data corresponding to the original electric comic book data indicating the original electric comic book X, and the created translation data are registered to the electric comic book delivering server 10 will be explained as an example. In this regard, steps for executing the same processes of the first embodiment are designated to the same reference numerals (step numbers), and the explanation of the processes is omitted.

After executing the processes of Steps S101 to S104, the client terminal 21 accesses a URL of a mask data delivering site set up by the electrical comic book delivering server 10, and selects the mask data corresponding to the original electric comic book X on a mask data selection screen for selection of the mask data to be acquired to request the electric comic book delivering server 10 to deliver the mask data (Step S401).

In response to the request to deliver the mask data, the data search unit 11 searches for the mask data corresponding to the requested original electric comic book X from a plurality of mask data stored in the speech balloon mask data database 17 (Step S402). The data transmitter/receiver 12 then transmits the searched mask data to the client terminal 21 via the communication network 30 (Step S403).

The client terminal 21 receives the mask data and decrypts the mask data (Step S404). Subsequently, the client terminal 22 displays the original electric comic book X indicated by the original electric comic book data, displays the mask sheet indicated by the obtained mask data in the mask layer above the original electric comic book X, and displays the translation character description sheet in the translation character layer above the mask layer. The client terminal 21 accepts a request to register the translation data in the same manner as that at Step S106 described above.

Subsequently, the client terminal 21 associates the accepted translation data with the corresponding original electric comic book X and mask data (such as a code designated to the mask data) to transmit the accepted translation data to the electric comic book delivering server 10 (Step S405).

When the electric comic book delivering server 10 receives the translation data (Step S406), the data encryption unit 13 in the electric comic book delivering server 10 encrypts the translation data thus received (Step S407). The data register unit 14 in the electric comic book delivering server 10 registers the encrypted translation data into the translation data database 18 (Step S409).

Since the electric comic book delivering system is constructed as described above, there is no need for the user to create the mask sheet. Namely, the user may create only the translation character description sheet. Thus, it is possible to reduce an operation load of the user.

Although it is not particularly referred to in the first and second embodiments described above, various processes described above are executed in accordance with processing programs (such as a network connection managing program) installed to the respective elements.

In this regard, in the first and second embodiments described above, the original electric comic book data, the mask data and the translation data are respectively encrypted using separate encryption keys, leakage of information and illegal copy can be prevented.

Further, in the first and second embodiment describedabove, the translated electric comic book data including three data for the three layers are transmitted to the client terminal, and the client terminal displays the translated electric comic book on the display device by superimposing images of the three layers (including the original electric comic book, the mask sheet and the translation character description sheet) in a predetermined order. However, the electric comic book delivering server 10 may execute a superposing process of the images of three layers to transmit a viewer screen of the superimposed translated electric comic book to the client terminal. The client terminal may receive the viewer screen and display the viewer screen of the superimposed translated electric comic book.

Moreover, in the first and second embodiments described above, although the original electric comic book data, the mask data and the translation data are respectively encrypted using different encryption keys , other encryption method can be applied to the data. For example, the decryption key for the original electric comic book data may be constituted from a combination of the decryption key assigned to the original electric comic book data and the decryption key assigned to the mask data or the translation data. Further, the decryption key for the original electric comic book data may be constituted from a combination of the three decryption keys assigned to the respective data. Moreover, a decryption key for the data other than the original electric comic book data may be constituted in the same manner. Namely, at least two of the original electric comic book data, the mask data and the translation data may be encrypted using encryption keys, respectively. In this case, decryption keys for decrypting the encrypted at least two data may be constructed on the basis of decryption key elements respectively assigned to the original electric comic book data, the mask data and the translation data.

In this regard, although it is not particularly referred to in the first and second embodiments described above, the mask sheet and the translation character description sheet as described above may be created by transferring only an operation screen to the client terminal and causing the user of the client terminal to operate the operation screen using Graphical User Interface (GUI) environment of an X window system or a Window Terminal Server (WTS).

## Claims

1. An electric comic book delivering server for delivering an electric comic book to a client terminal via a communication network, each of the server and the client terminal being connected to the communication network, the server comprising:
an original electric comic-book database for storing original electric comic book data indicating an original electric comic book obtained by computerizing an original comic book, the original electric comic book being constituted from at least one cartoon sheet;
a mask data database for storing mask data indicating a mask sheet on which a mask color is drawn for masking character information of each cartoon sheet of the original electric comic book, the mask sheet being to be displayed in a mask layer above an original electric comic book layer for displaying each cartoon sheet of the original electric comic book;
a translation data database for storing translation data indicating a translation character description sheet in which at least one translation character is described, the at least one translation character being used in place of at least one original character indicated by character information of each cartoon sheet of the original electric comic book, the at least one original character being masked by the mask color drawn on the mask sheet , the translation character description sheet being to be displayed in a translation character layer above the mask layer; and
a translated electric comic-book transmitter for transmitting, in response to a request to deliver a translated electric comic book from the client terminal, the original electric comic book data, the mask data indicating the mask sheet to be displayed in the mask layer above the original electric comic book layer for displaying each cartoon sheet of the original electric comic book indicated by the original electric comic book data, and the translation data indicating the translation character description sheet to be displayed in the translation character layer above the mask layer for displaying the mask sheet indicated by the mask data, to the client terminal via the communication network.

2. The server according to claim 1, wherein the original electric comic book data stored in the original electric comic-book database, the mask data stored in the mask data database and the translation data stored in the translation data database are respectively encrypted on the basis of encryption keys, and the encryption keys are different from one another.

3. The server according to claim 1, wherein at least two of the original electric comic book data stored in the original electric comic-book database, the mask data stored in the mask data database and the translation data stored in the translation data database are respectively encrypted on the basis of encryption keys, and decryption keys for decrypting the respective encrypted data are constituted from decryption key elements respectively assigned to the encrypted data.

4. The server according to claim 1, further comprising:
an electric comic-book transmitter for transmitting, in response to a request to deliver the original electric comic book from other client terminal, the original electric comic book data to the other client terminal via the communication network, the other client terminal being connected to the communication network;
a mask data receiver for receiving, from the other client terminal via the communication network, mask data created using a mask data creating function of the other client terminal, the created mask data indicating the mask sheet to be displayed in the mask layer above the original electric comic book layer for displaying each cartoon sheet of the original electric comic book transmitted by the electric comic-book transmitter;
a translation data receiver for receiving, from the other client terminal via the communication network, translation data created using a translation data creating function of the other client terminal, the created translation data indicating the translation character description sheet to be displayed in the translation character layer above the mask layer for displaying the mask sheet indicated by the mask data; and
a data register unit for respectively registering the mask data and the translation data thus received with the mask data database and the translation data database so as to be associated with the original electric comic book data transmitted by the electric comic-book transmitter.

5. The server according to claim 4, wherein the original electric comic book data stored in the original electric comic-book database, the mask data stored in the mask data database and the translation data stored in the translation data database are respectively encrypted using encryption keys, and the encryption keys are different from one another.

6. The server according to claim 4, wherein at least two of the original electric comic book data stored in the original electric comic-book database, the mask data stored in the mask data database and the translation data stored in the translation data database are respectively encrypted using encryption keys,
wherein decryption key elements are respectively assigned to the original electric comic book data, the mask data and the at least two data translation data, and decryption keys for decrypting the encrypted at least two data are constructed on the basis of the decryption key elements.

7. The server according to claim 1, further comprising:
an electric comic-book transmitter for transmitting, in response to a request to deliver the original electric comic book from other terminal, the original electric comic book data to the other client terminal via the communication network, the other client terminal being connected to the communication network;
a mask data transmitter for transmitting, in response to a request to deliver the mask data from the other client terminal, the mask data to the other client terminal via the communication network, the mask data indicating the mask sheet being to be displayed in the mask layer above the original electric comic book layer for displaying the original electric comic book data;
a translation data receiver for receiving, from the other client terminal via the communication network, translation data created using a translation data creating function of the other client terminal, the created translation data indicating the translation character description sheet to be displayed in the translation character layer above the mask layer for displaying the mask sheet indicated by the mask data, the mask data being transmitted by the mask data transmitter; and
a data register unit for registering the received translation data with the translation data database so as to be associated with the original electric comic book data transmitted by the electric comic-book transmitter.

8. The server according to claim 7, wherein the original electric comic book data stored in the original electric comic-book database, the mask data stored in the mask data database and the translation data stored in the translation data database are respectively encrypted using encryption keys, and the encryption keys are different from one another.

9. The server according to claim 7, wherein at least two of the original electric comic book data stored in the original electric comic-book database, the mask data stored in the mask data database and the translation data stored in the translation data database are respectively encrypted using encryption keys, decryption keys are provided so as to respectively correspond to the at least two of the original electric comic book data, the mask data and the translation data, and, one of the decryption keys is derived from either of an element assigned to a corresponding encrypted data of the one of the decryption keys and a combination of other one encryption key and the element assigned to a corresponding encrypted data of the one of the decryption keys.

10. An apparatus for creating translated electric comic book, comprising:
an original electric comic-book receiver for receiving original electric comic book data indicating an original electric comic book from an electric comic book delivering server via a communication network, the original electric comic book being obtained by computerizing an original comic book, the apparatus and the server being connected to the communication network, the original electric comic book being constituted from at least one cartoon sheet;
a mask data acceptor for accepting mask data indicating a mask sheet, on which a mask color is drawn, the mask data being obtained by:
displaying the original electric comic book indicated by the original electric comic book data, received from the server by the original electric comic-book receiver, in an original electric comic book layer for displaying each cartoon sheet of the original electric comic book;
displaying a mask sheet in a mask layer above the original electric comic book layer for displaying each cartoon sheet of the original electric comic book; and
accepting a drawing operation by a user to draw the mask color at a predetermined position on the mask sheet so as to mask character information of the original electric comic book displayed through the mask sheet; a translation data acceptor for accepting translation data
indicating a translation character description sheet, on which at least one translation character is described, obtained by:
displaying a translation character description sheet in a translation character layer above the mask layer; and
accepting the at least one translation character described at a predetermined position on the translation character description sheet by the user, the at least one translation character being used in place of at least one original character indicated by the character information, the character information being masked by the mask color drawn on the mask sheet; and
a register request unit for transmitting the mask data accepted by the mask data acceptor and the translation data accepted by the translation data acceptor to the server via the communication network to request the server to register the mask data and the translation data into a database so that the mask data and the translation data are associated with the original electric comic book data received by the original electric comic-book receiver in order for the server to deliver a translated electric comic book.

11. The apparatus according to claim 10, wherein the mask data acceptor accepts selection of at least one of the mask color and a shape of a part to be drawn with the mask color.

12. The apparatus according to claim 10, wherein the register request unit requests the server to register, along with the mask data, at least one of a title and a page number of the original electric comic book data corresponding to the mask data.

13. The apparatus according to claim 10, wherein the translation data acceptor accepts selection of at least one of a color, a font, and a size for the at least one translation character.

14. The apparatus according to claim 10, wherein the register request unit requests the server to register, along with the translation data, at least one of a title and a page number of the original electric comic book data corresponding to the translation data and a language used for the at least one translation character.

15. A method of creating an electric comic book by utilizing a client terminal, the method comprising:
receiving original electric comic book data indicating an original electric comic book from an electric comic book delivering server via a communication network, the original electric comic book being obtained by computerizing an original comic book, the server being connected to the communication network, the electric comic book being constituted from at least one cartoon sheet;
accepting mask data indicating a mask sheet, on which a mask color is drawn, the mask data being obtained by:
displaying the original electric comic book indicated by the original electric comic book data, obtained from the server, in an original electric comic book layer for displaying each of cartoon sheet of the original electric comic book;
displaying a mask sheet in a mask layer above the original electric comic book layer for displaying each of cartoon sheet of the original electric comic book; and
accepting a drawing operation by a user to draw the mask color at a predetermined position on the mask sheet so as to mask character information of the original electric comic book displayed through the mask sheet; accepting translation data indicating a translation
character description sheet, on which at least one translation character is described, obtained by:
displaying a translation character description sheet in a translation character layer above the mask layer; and
accepting the at least one translation character described at a predetermined position on the translation character description sheet by the user, the at least one translation character being used in place of at least one original character indicated by the character information, the character information being masked by the mask color drawn on the mask sheet; and
transmitting the mask data accepted in the accepting the mask data and the translation data accepted in the accepting the translation data to the server via the communication network to request the server to register the mask data and the translation data into a database so that the mask data and the translation data are associated with the original electric comic book data received in the receiving the original electric comic book data in order for the sever to deliver a translated electric comic book.

16. The method according to claim 15, wherein in the accepting the mask data, selection of at least one of the mask color and a shape of a part to be drawn with the mask color is accepted.

17. The method according to claim 15, wherein in the transmitting the mask data and the translation data, the server is requested to register, along with the mask data, at least one of a title and a page number of the original electric comic book data corresponding to the mask data.

18. The method according to claim 15, wherein in the accepting the translation data, selection of at least one of a color, a font, and a size for the at least one translation character is accepted.

19. The method according to claim 15, wherein in the transmitting the mask data and the translation data, the server is requested to register, along with the translation data, at least one of a title and a page number of the original electric comic book data corresponding to the translation data and a language used for the at least one translation character.
